# EUROPÄISCHE PATENTSCHRIFT

(11) **EP 1 486 524 B1**
(45) Veröffentlichungstag und Bekanntmachung des Hinweises auf die Patenterteilung: **22.12.2010**
(21) Anmeldenummer: 04011496.9
(22) Anmeldetag: 14.05.2004
(51) Int. Cl.: C08G 59/18, B01F 17/00

(54) **Epoxid-Addukte und deren Salze als Dispergiermittel**
Epoxide adducts and their salts as dispersing agents
Produits d'addition avec des époxydes et leurs sels comme agent dispersant

(30) Priorität: 06.06.2003 DE 10326147
(43) Veröffentlichungstag der Anmeldung: 15.12.2004
(73) Patentinhaber: Byk-Chemie GmbH, 46483 Wesel (DE)
(72) Erfinder: Krappe, Udo, Dr., 46446 Emmerich (DE); Haubennestel, Karlheinz, 46487 Wesel (DE); Pentzek, Andrea, 47608 Geldern (DE); Matthée, Peter, 58313 Herdecke (DE)
(74) Vertreter: Leifert & Steffan

(56) Entgegenhaltungen:
- WO-A-96/20971
- DE-A- 3 623 297
- DE-A- 19 751 143
- US-A1- 2002 010 231

## Beschreibung

Die vorliegende Erfindung betrifft Umsetzungsprodukte von Epoxiden mit speziellen Aminen und deren Salze als Netz- und Dispergiermittel für Pigmente und Füllstoffe. Weiterhin betrifft diese Erfindung das Verfahren zur Herstellung dieser Umsetzungsprodukte sowie deren Verwendung als Netz- und Dispergiermittel für organische und anorganische Pigmente sowie Füllstoffe in organischen und wässrigen Systemen und in flüssige Systeme einzuarbeitende pulver- oder faserförmige Feststoffe, die mit solchen Dispergiermitteln beschichtet sind.

Die vorgenannten Umsetzungsprodukte eignen sich besonders zur Herstellung von Pigmentkonzentraten (Pigmentpasten) sowie zur Stabilisierung von Feststoffteilchen in Bindemitteln, Lacken, Kunststoffen und Kunststoffmischungen. Die Umsetzungsprodukte reduzieren die Viskosität solcher Systeme, verbessern Fliesseigenschaften und Lagerstabilitäten und erhöhen die Farbstärke.

Um Feststoffe in flüssige Medien einbringen zu können, sind hohe mechanische Kräfte erforderlich. Es ist üblich Dispergiermittel einzusetzen, um diese Dispergierkräfte zu erniedrigen und um den zur Deflockulierung der Feststoffteilchen notwendigen Gesamtenergieeintrag in das System und damit auch die Dispergierzeit so gering wie möglich zu halten. Hierbei handelt es sich meist um oberflächenaktive Stoffe, von anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, dass es auch nach vollständiger Deflockulierung der Feststoffagglomerate in Primärteilchen, nach dem Dispergierprozess zu Reagglomerationen kommt, wodurch der Dispergieraufwand teilweise oder vollständig zunichte gemacht wird. Als Folge der unzulänglichen Dispergierung bzw. durch Reagglomeration kommt es zu unerwünschten Effekten wie Viskositätsanstieg in flüssigen Systemen, Farbtondrift und Glanzverlusten in Lacken und Beschichtungen sowie Verringerung der mechanischen Festigkeit in Kunststoffen.

Eine Vielzahl verschiedener Substanzen findet heute Verwendung als Dispergiermittel für Pigmente und Füllstoffe. Ein Überblick über vorhandene Patentliteratur findet sich in EP-A-0 318 999. Neben sehr einfachen, niedermolekularen Verbindungen wie z.B. Lecithin, Fettsäuren und deren Salzen und Alkylphenolethoxylaten werden auch komplexe Strukturen als Dispergiermittel eingesetzt.

Unter anderem werden auch Umsetzungsprodukte von Epoxiden als Netz- und Dispergiermittel eingesetzt. So beschreiben die US-Patente Nr. 5,128,393 und Nr. 4,710,561 Umsetzungsprodukte von Monoepoxiden mit Aminoimidazolinen. US-A-5128393 beschreibt die Verwendung von Reaktionsprodukten aus Mono- oder Polyepoxiden mit Aminen, die eine Imidazolin-Gruppierung erhalten, als Dispergiermittel. US-A-5,128,393, US-A-4,710,561 und US-A-5128393 können als Stand der Technik in dem Gebiet der Epoxi-Amin-Addukte angesehen werden.

DE-A-3623296 und DE-A-3623297 beschreiben die Verwendung von Polyepoxid/Amin-Mischungen und deren Salzen als Dispergiermittel für Pigmente vornehmlich in organischen Medien, wobei es sich bei den Polyepoxiden um Novolake handelt und bei den Aminen um aliphatische, aromatische und/oder heterocyclische Amine mit niedrigem Molekulargewicht.

(Poly-) Epoxide sind seit langem als Bestandteile von Bindemitteln bekannt. Solche Systeme werden oftmals mit Aminen als Härterkomponenten in Kontakt gebracht und ausgehärtet. In neueren Veröffentlichungen zu diesem Themenkomplex werden spezielle Amine oder Amin-Epoxid-Addukte als Härter für Epoxid-Harze beschrieben. So finden sich selbstdispergierbare härtbare Epoxid-Harze durch Umsetzungen von aromatischen Polyepoxiden mit Polyoxyalkylenaminen im Äquivalentverhältniss (Epoxyequivalent : Aminequivalent) zwischen 1: 0,1 und 1 . 0,28 in US 6506821 B1. Da solche Verbindungen einen erheblichen Gehalt an Epoxid-Gruppen tragen, sind sie als Netz- und Dispergiermittel ungeeignet, da die hergestellten Pigmentkonzentrate nicht lagerstabil sind. Ähnliche Produkte werden auch in US-A-3 945 964 sowie US-A-4 485 229 als wässrige Emulgiermittel beschrieben. Weiterhin werden in US-A-4 051 195 und EP-A-0 245 559 Vernetzungsmittel auf Basis von Epoxiden mit Polyoxyalkylenaminen beschrieben, die auch noch im Sinne einer Michael-Reaktion mit Acrylsäureestern umgesetzt sind. Da auch diese Produkte als Vernetzerkomponente fungieren sollen, ist auch in diesen Beispielen eine hohe Dichte an vernetzungsfähigen Gruppen vorhanden, welche die Produkte als Dispergiermittel unbrauchbar machen. Diese Einschränkung trifft auch für Produkte gemäß WO 96/20971 zu, in der Umsetzungsprodukte aus Epoxid-Harzen mit Amin-Epoxid-Addukten als selbstemulgierende härtbare Epoxid-Harze beschrieben werden. Bei den vorgenannten Amin-Epoxid-Addukten handelt es sich um Umsetzungsprodukte von Polyepoxiden mit einem Unterschuss an Polyoxyalkylendiaminen. Polyoxyalkylendiamine als sogenannte Modifizierungsagenzien werden auch in DE-A-43 09 639 eingesetzt. In EP-A-0000 605 und in DE 23 32 177/GB-A-1408105 werden leicht in Wasser dispergierbare modifizierte Amin-Addukte beschrieben. Als Aminhärter werden auch Polyoxyalkylenamine (die z. B. unter dem Warenzeichen Jeffamine von der Huntsman Corporation vertrieben werden) eingesetzt. Netz- und Dispergiermittel auf Basis von definierten Addukten aus Polyoxyalkylenaminen und Epoxiden ohne freie Epoxidgruppen wurden bislang jedoch nicht beschrieben.

In EP-A-747 413 werden als Emulgatoren Umsetzungsprodukte aus aliphatischen Polyolen mit Epoxiden mit mindestens 2 Epoxidgruppen pro Ring beschrieben. Diese Verbindungen tragen also keine versalzbaren N-Atome und zeigen somit nur geringe Affinität zu Pigmenten und Füllstoffen.

Allen vorgenannten Dispergiermitteln ist gemeinsam, dass sie jeweils nur für ein eng begrenztes Einsatzgebiet entwickelt wurden und daher speziell in bezug auf eine gemeinsame Verwendung in Systemen stark unterschiedlicher Polarität nur bedingt eingesetzt werden können.

In sogenannten Universalabtönpasten, worunter man Pigmentpasten versteht, die hauptsächlich in der Bautenfarbenindustrie zum Abtönen von wässrigen, colöserhaltigen oder lösungsmittelhaltigen Dispersionsfarben oder Malerlacken verwendet werden, wurden lange Zeit Alkylphenolethoxylate bzw. deren Phosphorsäureester als Netz- und Dispergiermittel verwendet. Diese Substanzen zeichnen sich, im Gegensatz zu den oben als Dispergiermittel verwendeten Epoxid-Addukten durch breite Verträglichkeit in den verwendeten Bindemitteln aus. Aus ökotoxikologischen Aspekten sind diese Substanzen aber in die Kritik geraten und in einigen Staaten unterliegen sie bereits strengen Restriktionen in ihrer Verwendung.

Alternativ zu den Alkylphenolethoxylaten werden Fettalkoholethoxylate bzw. deren Phosphorsäureester zur Herstellung von Abtönpasten verwendet. Die positiven Eigenschaften der Alkylphenolethoxylate in bezug auf die Pigmentstabilisierung werden von den Fettalkoholethoxylaten in den meisten Fällen nicht erreicht. Außerdem ist die Neigung zur Stabilisierung von Schaum eine negative Begleiterscheinung der Fettalkoholethoxylate.

Neben den genannten Fettalkoholethoxylaten und deren Derivaten werden auch blockcopolymere Phosphorsäureester und deren Salze (DE 100 29 648 US2002011183A1) sowie Styroloxyd-haltige Polyalkylenoxyde (DE 199 40 797/EP-A-1078946) als Dispergiermittel eingesetzt. Aber auch diese Substanzen zeigen Schwächen in der Verträglichkeit mit einigen Bindemittelsystemen sowie Schaumprobleme bei der Herstellung von Pigmentpasten.

Der vorliegenden Erfindung liegt daher die Aufgabe zugrunde, die zuvor beschriebenen Nachteile bekannter Dispergiermittel zu beseitigen, d.h. Dispergieradditive zu entwickeln, die bei guter Stabilisierung von Pigmenten oder Füllstoffen die Mahlgutviskosität der Lacke, Pasten oder Kunststoffformulierungen so weit senken, dass eine Verarbeitung bei hohem Füllgrad möglich ist. Gleichzeitig muss speziell bei Pigment- und Füllstoffpasten eine breite Verträglichkeit gewährleistet sein, um diese in vielen unterschiedlichen Bindemitteln und Überzugsmaterialien einsetzen zu können. Solche Pasten sollen sowohl in unpolaren Bindemitteln, wie beispielsweise einem Malerlack auf Langölalkydbasis, als auch in polaren Systemen wie wässrigen Dispersionsfarben angewendet werden können. Weiterhin ist es erforderlich, dass die verwendeten erfindungsgemäßen Dispergieradditive eine flockulationsfreie Mischbarkeit der Pasten, bzw. der mit diesen Pasten hergestellten Bindemittel, untereinander ermöglichen.

Überraschenderweise wurde gefunden, dass Additionsprodukte von aromatenhaltigen Epoxiden mit speziellen Aminen und/oder deren Phosphorsäureestersalze die beschriebenen Anforderungen erfüllen.

Gegenstand der vorliegenden Erfindung sind daher als Netz- und Dispergiermittel geeignete Additionsverbindungen, die erhältlich sind durch Umsetzung von
(I) mono- oder polyfunktionellen, aromatischen Epoxiden
   mit
(II) Polyoxyalkylenmonoaminen, die ein zahlenmittleres Molekulargewicht von > 400 g/mol, eine primäre oder sekundäre Aminogruppe und mindestens 4 Ethersauerstoffe pro Molekül aufweisen, wobei
90 bis 100 % der Epoxidgruppen des Ausgangsmaterials umgesetzt sind,
der Gewichtsanteil der Additionsverbindungen an aromatischen Gruppen nicht mehr als 50 % beträgt und
die Additionsverbindungen mindestens eine versalzbare Aminogruppe pro Molekül aufweisen oder als Salz vorliegen.

Auch Mischungen der vorgenannten Additionsverbindungen sind als Netz- und Dispergiermittel geeignet.

Im Falle von polyfunktionellen Epoxiden ist es vorteilhaft, dass im molaren Mittel mindestens eine Epoxid-Gruppe pro Molekül mit einem Polyoxyalkylenmonoamin umgesetzt ist und eine oder mehrere weitere Epoxid-Gruppen mit einer anderen Epoxid-reaktiven Verbindung umgesetzt ist bzw. sind. Hierdurch ist es möglich, die Eigenschaften der erfindungsgemäßen Netz- und Dispergiermittel zu modifizieren und sie optimal an ihren Einsatzzweck anzupassen. Die weitere oder die weiteren Epoxid-Gruppen können vorteilhaft mit einer gesättigten oder ungesättigten Carbonsäure und/oder Hydroxycarbonsäure, einem Alkohol oder einem primären oder sekundären Amin umgesetzt sein.

Sowohl für Epoxide mit zwei oder mehr Epoxid-Gruppen (Polyepoxide) die nur mit den Polyoxyalkylenmonoaminen umgesetzt wurden, als auch für Polyepoxide, die sowohl mit Polyoxyalkylenmonoaminen als auch mit anderen Reaktanden umgesetzt sind, gilt die Maßgabe, dass die molare Anzahl von Epoxid-Gruppen immer gleich oder kleiner sein sollte, als die molare Anzahl der mit diesen Epoxid-Gruppen reagierenden Gruppen (z.B. Amino-Gruppen oder Mischungen aus Amino-Gruppen und z.B. Carbonsäure-Gruppen). Das Epoxidäquivalentgewicht der Umsetzungsprodukte sollte also theoretisch gegen unendlich gehen und somit alle Epoxigruppen umgesetzt sein. Vorzugsweise sollten mehr als 95 % der Epoxid-Gruppen des Ausgangsmaterials umgesetzt sein.

In einer besonders bevorzugten Ausführungsform liegen die erfindungsgemäßen Additionsverbindungen als Phosphorsäureestersalze einer Phosphorsäure der allgemeinen Formel (HO)₃₋ₙPO(OR¹)ₙ vor, in der n = 1 oder 2 ist und R¹ einen geradkettigen oder verzweigten Alkylrest mit 5 bis 20 C-Atomen oder einen Aryl- oder Aralkylrest mit 6 bis 26 C-Atomen und/oder einen Rest eines oxalkylierten Alkohols mit einem zahlenmittleren Molekulargewicht zwischen 100 und 5000 g/mol und/oder einen Rest mit mindestens einer Carbonsäureestergruppe und einem zahlenmittleren Molekulargewicht zwischen 400 und 5000 g/mol und/oder einen Rest mit mindestens einer Urethangruppe und einem zahlenmittleren Molekulargewicht zwischen 100 und 5000 g/mol dargestellt.

Der Rest R¹ der Phosphorsäureester ist wesentlicher Bestandteil einer bevorzugten Ausführungsform der erfindungsgemäßen Dispergiermittel und dadurch gekennzeichnet, dass er mindestens einen Ethersauerstoff (-O-) und/oder eine Carbonsäureesterfunktion (-COO-) und/oder eine Urethangruppe (-NHCOO-) enthält und/oder einen Alkyl-, Aryl- bzw. Aralkylrest mit mehr als 5-Kohlenstoffatomen. Das zahlenmittlere Molekulargewicht Mₙ des Restes R¹ kann zwischen 100 und 20 000 g/mol, bevorzugt zwischen 100 und 5000 g/mol betragen, wobei Wasserstoffatome teilweise durch Halogenatome ersetzt sein können. Der Rest R¹ kann weiterhin Gruppen tragen, die sich bei der Bildung des Versalzungsprodukts inert verhalten wie z.B. die Carbonsäureamidgruppe (-NHCO-), nicht aktivierte Doppelbindungen oder Harnstoffgruppierungen (-NHCONH-). R¹ stellt bevorzugt den Rest eines oxalkylierten und/oder carbonsäureesterhaltigen Monoalkohols dar. Das Molekulargewicht eines solchen Restes R¹ liegt bevorzugt im Bereich von 200-5000 g/mol, da sich Produkte mit kleinerem oder höheren Molekulargewicht als weniger wirksam erwiesen haben. Außerdem sind Reste mit höherem Molekulargewicht nur schwer herstellbar und kommerziell meist nicht erhältlich. Besonders bevorzugt sind Molekulargewichte des Restes R¹ im Bereich zwischen 300 und 2500 g/mol, da sich Produkte mit Resten, die in diesem Molekulargewichtsbereich bewegen, leicht herstellen und verarbeiten lassen und über gute Wirksamkeit verfügen. Ganz besonders bevorzugt sind Phosphorsäureester deren Rest R¹ einen oxalkylierten oder carbonsäureesterhaltigen Monoalkohol oder einen oxalkylierten-carbonsäureesterhaltigen Monoalkohol mit einem mittleren Molekulargewicht im Bereich von 300 - 2500 g/mol darstellt.

Durch die Wahl des Restes R¹ wird eine angepasste Verträglichkeit des Dispergieradditivs mit verschiedensten Bindemitteln gewährleistet.

Die Synthese der erfindungsgemäßen Phosphorsäureester, die zur Versalzung der erfindungsgemäßen Additionsverbindungen eingesetzt werden, ist beispielhaft in Houben-Weyl "Methoden der organischen Chemie" Band XII/2, 4. Auflage, S. 143 ff. beschrieben.

Als Versalzungsgrad (darunter soll in diesem Zusammenhang das Verhältnis zwischen Säureäquivalenten zu Aminäquivalenten verstanden werden) werden Werte zwischen 0,1 und 1 und ganz besonders Werte zwischen 0,5 und 1 bevorzugt, da die letztgenannten Produkte die breiteste Verwendbarkeit für verschiedene Bindemittel und Feststoffe besitzen. Je nach verwendetem Feststoff, der zu dispergieren ist, können Produkte mit hohem oder mit niedrigen Versalzungsgrad eingesetzt werden. So lassen sich z.B. bei der Dispergierung von sauren Rußsorten Versalzungskomponenten mit ausgezeichneter Dispergierqualität einsetzen, die einen hohen Überschuss an basischen Gruppen tragen, bei denen also das Epoxid-Polyoxyalkylenamin-Addukt nicht vollständig mit dem entsprechenden Phosphorsäureester versalzt ist. Neben den Produkten die nicht vollständig versalzt wurden, ist es durchaus sinnvoll für bestimmte Anwendungen auch Produkte einzusetzen, die bezogen auf das Aminäquivalent einen Säureüberschuss tragen, so z.B. wenn Feststoffe zur Dispergierung eingesetzt werden, die selbst basisch sind. Bis zu einem Anteil von 20% bezogen auf die Gesamtmenge der eingesetzten Substanzen können auch saure Poly(meth)arylate mit Carbonsäuregruppen und/oder Phosphorsäuregruppen als Versalzungskomponente eingesetzt werden.

Neben den versalzten erfindungsgemäßen Additionsverbindungen können die Aminogruppen auch quaternisiert vorliegen. Die Quaternisierung erfolgt in dem Fachmann bekannter Weise z.B. mit Alkyl- oder Aralkylhalogeniden mit Halogencarbonsäureestern oder mit Epoxiden. Eine solche Ausführungsform ist z.B. dann zu bevorzugen, wenn Aminogruppen oder Säuregruppen in dem Bindemittelsystem stören, in welches die Pigmentkonzentrate eingearbeitet werden.

Eine bevorzugte Ausführungsform der erfindungsgemäßen Produkte stellen Umsetzungen mit Edukten auf Basis von Polyglycidylethern mehrwertiger Phenole mit Polyoxyalkylenaminen mit Ethylenoxyd- und/oder Propylenoxydeinheiten in der Polyetherkette und deren Phosphorsäureestersalze dar. Diese Verbindungen sind bevorzugt, da die erfindungsgemäßen Additionsverbindungen auf Basis von mehrwertigen Phenolen sich durch gute Verträglichkeit mit vielen Bindemitteln auszeichnen.

Unter mehrwertigen Phenolen sollen Verbindungen verstanden werden, die in WO 96/20971. (Seite 16 Zeile 15 bis Seite 17 Zeile 18) beschrieben sind.

Unter Polyoxyalkylenaminen sollen in Anlehnung an WO 96/20971 Seite 7, Zeile 22 bis Seite 10, Zeile 17 Verbindungen verstanden werden, die einerseits eine primäre und/oder sekundäre Aminogruppe tragen und zum andern Reaktionsprodukte von Alkylenoxyden als Bausteine erhalten. Als Alkylenoxyde können beispielsweise Ethylenoxyd und/oder Propylenoxyd und/oder Butylenoxyd und/oder Styroloxyd verwendet werden. Unter Polyoxyalkylenmonoaminen sollen gemäß der oben angeführten Definition Polyoxyalkylenamine verstanden werden, die im statistischen Mittel nur eine primäre oder sekundäre Aminogruppe pro Molekül tragen.

Eine besonders bevorzugte Ausführungsform der erfindungsgemäßen Produkte stellen Umsetzungen mit Edukten auf Basis von Bisphenol A-Epoxiden mit Polyoxyalkylenaminen mit Ethylenoxyd- und/oder Propylenoxydeinheiten in der Polyetherkette und deren Phosphorsäureestersalze dar. Diese Verbindungen sind besonders bevorzugt, da die erfindungsgemäßen Additionsverbindungen auf Basis von Bisphenol A-Epoxiden sich durch besonders gute Verträglichkeit mit vielen Bindemitteln auszeichnen.

Eine weitere bevorzugte Ausführungsform der erfindungsgemäßen Produkte stellen Umsetzungen mit Edukten auf Basis von Novolaken mit Polyoxyalkylenaminen mit Ethylenoxid- und/oder Propylenoxideinheiten in der Polyetherkette und deren Phosphorsäureestersalze dar. Auch diese Additionsverbindungen und ihre Salze zeigen gute Verträglichkeit mit verschiedenen Bindemittelsystemen.

Als besonders geeignete Vertreter der Polyoyxalkylenamine können die dem Fachmann bekannten "Jeffamine" der Fa. Huntsman (früher von der Firma Texaco hergestellt und vertrieben) oder Mischungen verschiedener Jeffamine verwendet werden, da solche Produkte die Viskosität der hergestellten Pigmentpasten besonders stark erniedrigen.

Ein weiterer bevorzugter Vertreter der erfindungsgemäßen Additionsverbindungen sind mit Polyoyxalkylenaminen, welche eine primäre Aminogruppe tragen, umgesetzte Polyepoxide, bei denen nachträglich zwischen 10 und 50 % der entstandenen sekundären Aminogruppen mit Fettsäuren wie z.B. Stearinsäure umgesetzt sind. In dieser Klasse sind besonders bevorzugte Vertreter Additionsverbindungen, die einen hohen Anteil an ungesättigten Fettsäuren wie z. B. Ölsäure, Linolsäure, Linolensäure tragen, da solche Verbindungen z, B. in Bindemittel auf Alkydbasis eingebaut werden können und gut verträglich mit vielen Bindemitteln sind.

Bei Verwendung von Polyoyxalkylenamine mit einer primären Aminofunktion kann diese Aminofunktion bevorzugt vor, aber auch nach der Umsetzung mit der Epoxid-Gruppe z.B. mit Acrylsäureestern im Sinne einer Michael-Reaktion modifiziert werden. Wird die primäre Aminofunktion vor der Umsetzung mit der Epoxid-Gruppe modifiziert, gilt die Maßgabe, dass die Michael Reaktion nur einfach, das heisst unter Bildung einer sekundären Amino-Gruppe, durchgeführt werden darf.

Weiterhin kann bei Verwendung von Polyoyxalkylenamine mit einer primären Aminofunktion, die nach der Umsetzung mit der Epoxid-Gruppe entstandene sekundäre Aminofunktion mit Monoisocyanaten zum entsprechenden Harnstoffderivat umgesetzt werden.

Neben den bevorzugt einzusetzenden Polyoxyalkylenmonoaminen können zu einem geringen Anteil auch Polyoyxalkylenamine mit zwei oder mehr Amino-Gruppen pro Molekül eingesetzt werden. Mit solchen Verbindungen kann man das Molekulargewicht der erfindungsgemäßen Additionsverbindungen erhöhen, was für einige Anwendungen vorteilhaft ist. Die Grenze des Einsatzes von Polyoyxalkylenaminen mit zwei oder mehr Amino-Gruppen pro Molekül ist erreicht, wenn sich irreversible Vernetzung des Reaktionsgemischs einstellt.

Die erfindungsgemäßen Additionsverbindungen und deren Phosphorsäureestersalze können sowohl in Substanz, als auch in geeigneten Lösungsmitteln, besonders bevorzugt in Wasser oder in nicht flüchtigen Trägermaterialien, als Netz- und Dispergiermittel verwendet werden.

Die Erfindung betrifft auch ein Verfahren zur Herstellung von als Netz- und Dispergiermittel geeigneten Additionsverbindungen, das dadurch gekennzeichnet ist, dass
(I) mono- oder polyfunktionelle, aromatische Epoxide
   mit
(II) Polyoxyalkylenmonoaminen, die ein zahlenmittleres Molekulargewicht von > 400 g/mol, eine primäre oder sekundäre Aminogruppe und mindestens 4 Ethersauerstoffe pro Molekül aufweisen, zu Produkten umgesetzt werden, bei denen 90 bis 100 % der Epoxidgruppen des Ausgangsmaterials umgesetzt sind und der Gewichtsanteil der Additionsverbindungen an aromatischen Gruppen nicht mehr als 50 % beträgt,
und die Additionsverbindungen mindestens eine versalzbare Aminogruppe pro Molekül aufweisen oder die Additionsverbindungen versalzt werden.

Die Herstellung der Dispergiermittel kann sowohl in organischen Lösungsmitteln durchgeführt werden, die sich bezüglich den reaktiven Gruppierungen inert verhalten, als auch ohne diese Lösungsmittel, je nach gewünschter Viskosität des Endproduktes. Dabei kann die Reaktion so geführt werden, dass man entweder das modifizierte und/oder nicht modifizierte Epoxid vorlegt, und die modifizierten und/oder nicht modifizierten Polyoxyalkylenaminen bzw. deren Mischungen schnell zufügt oder aber die Amine vorlegt und das Epoxid zusetzt. Nachfolgend können dann die weiteren beschriebene Modifikationen durchgeführt werden. Nicht zwingend notwendig, aber bevorzugt, führt man eine eventuelle Versalzung mit den erfindungsgemäßen Phosphorsäureestern als letzten Reaktionsschritt durch. Eventuell eingesetzte Lösungsmittel können auch nachträglich entfernt oder durch andere Lösungsmittel oder Trägermaterialien ersetzt werden.

Gegebenenfalls kann die Reaktionsgeschwindigkeit der Umsetzung zwischen Epoxid- und Amino-Gruppen mit dem Fachmann bekannten sauren oder basischen Katalysatoren eingestellt werden.

Der Grad der Umsetzung bei der Reaktion der Epoxid-Gruppen mit den Amino-Gruppen der Polyoxyalkylenaminen kann z.B. über NMR-Messungen oder über HPLC-Messungen verfolgt werden.

Der Einsatz der erfindungsgemäßen Dispergiermittel kann gemäß dem Stand der Technik für bekannte Dispergiermittel erfolgen. Die Dispergiermittel können alleine oder zusammen mit Bindemitteln eingesetzt werden. Beim Einsatz in Polyolefinen kann es z.B. vorteilhaft sein, entsprechende niedermolekulare Polyolefine als Trägermaterialien zusammen mit dem Dispergiermittel einzusetzen.

Neben dem Einsatz der erfindungsgemäßen Reaktionsprodukte als Dispergiermittel und als Dispersionsstabilisatoren ist auch die Beschichtung von pulver- oder faserförmigen Feststoffen mit den erfindungsgemäßen Produkten Gegenstand dieser Erfindung. Derartige Beschichtungen von organischen wie auch anorganischen Feststoffen werden in bekannter Weise ausgeführt, wie sie z.B. in EP-A-0 270 126 beschrieben werden. Hierbei kann das Lösungs- oder Emulsionsmittel entweder entfernt werden oder im Gemisch unter Bildung von Pasten verbleiben. Diese Pasten können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen z.B. durch Zusatz der erfindungsgemäßen Produkte zur Pigmentsuspension oder während oder nach dem Pigmentfinish.

Die auf diese Weise vorbehandelten Pigmente zeichnen sich durch leichtere Einarbeitbarkeit im Bindemittel, sowie durch verbessertes Viskositäts-, Flockulations- und Glanzverhalten gegenüber nicht behandelten Pigmenten aus.

Neben der oben beschriebenen Anwendung als Beschichtungsmittel für pulver- und faserförmige Feststoffe können die erfindungsgemäßen Dispergiermittel auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Ihre Herstellung und Verarbeitung ist beispielhaft in DE-A-36 43007 beschrieben. Um eine hohe Steifigkeit, eine gute Oberflächenqualität und flammhemmende Eigenschaften (bei Füllstoffen wie z.B. Al(OH)₃ oder Mg(OH)₂) zu erhalten, ist es notwendig diese Systeme hoch mit Füllstoffen und Fasern zu füllen, was zu einem starken Viskositätsanstieg der SMC und BMC-Mischungen und zu Problemen bei der Benetzung der Fasern führt. Ein weiteres Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. Polystyrol ist nicht verträglich mit den verwendeten ungesättigten Polyesterharzen und es kommt zur Separation der Komponenten. Durch den Einsatz der erfindungsgemäßen Produkte ist es möglich die Viskosität der Harz/Füllstoff Gemische stark zu senken, so dass ein höherer Füllgrad möglich ist, der sowohl die mechanischen Eigenschaften, die Oberflächenbeschaffenheit und bei Verwendung von Al(OH)₃ oder Mg(OH)₂ die flammhemmende Wirkung positiv beeinflusst. Bei Verwendung von Polystyrol-gefüllten SMC- oder BMC-Mischungen können die erfindungsgemäßen Additive aufgrund ihrer guten Dispergierqualitäten eine Kompatibilisierung zwischen Polystyrol und ungesättigtem Polyesterharz herbeiführen, wodurch sich die Lagerstabilität und Verarbeitungssicherheit solcher Mischungen erhöht.

Die erfindungsgemäßen Dispergiermittel werden in bevorzugt einer Menge von 0,5 bis 100 Gew. %, bezogen auf den zu dispergierenden Feststoff, eingesetzt. Zur Dispergierung spezieller Feststoffe können aber durchaus wesentlich höhere Mengen der Dispergiermittel notwendig sein.

Die Menge an Dispergiermittel ist im wesentlichen abhängig von der zu belegenden Oberfläche des zu dispergierenden Feststoffes. Ruß benötigt z.B. wesentlich größere Mengen an Dispergiermittel als z.B. TiO₂. Beispiele für Pigmente oder

Füllstoffe finden sich in EP-A-0 270 126. Weitere Beispiele sind Neuentwicklungen besonders im Bereich der organischen Pigmente wie z.B. die Klasse der Diketopyrrolo-pyrrole, aber auch magnetische Pigmente z.B. auf Basis von Reineisen oder Mischoxyden. Des weiteren lassen sich auch mineralische Füllstoffe, z.B. Calciumcarbonat, Calciumoxid aber auch Flammschutzmittel wie z.B. Aluminium- oder Magnesiumhydroxid dispergieren. Mattierungsmittel wie z.B. Kieselsäuren lassen sich ebenfalls hervorragend dispergieren und stabilisieren.

### Beispiele

Die Erfindung wird durch die nachfolgenden Beispiele zusätzlich erläutert. Wenn nicht anders angegeben handelt es sich bei Teilen um Gewichtsteile bei Prozenten um Gewichtsprozente. Bei molekular uneinheitlichen Substanzen stellen die angegebenen Molekulargewichte Durchschnittswerte des Zahlenmittels dar.

### Beispiel 1:

20 Teil Epikote 1001 werden mit 44 Teilen Jeffamin M 1000 vermischt und in einer Stickstoffatmosphäre ca. 4 Stunden auf 140°C erhitzt, bis sich keine Epoxid-Gruppen mehr z.B. in einem Protonen-Kernresonanz-Experiment (NMR) nachweisen lassen. Die Zusammensetzung der Reaktionslösung wurde so gewählt, dass pro Mol Epoxid-Gruppen ein Mol primäre Amino-Gruppen eingesetzt wurden. Man erhält eine gelbliche, klare, viskose Reaktionslösung. Das Produkt kristallisiert nach einiger Zeit aus und kann zur Verwendung als Netz- und Dispergiermittel entweder in warmen Zustand eingesetzt werden oder in geeigneten Lösungsmittel angelöst werden.

Epikote 1001 ist ein Handelsprodukt der Shell AG. Es handel sich um ein höhermolekulares, festes Epoxidharz auf Bisphenol A-Basis.

### Beispiele 2 - 4:

Analog Beispiel 1 wurden weitere Epoxide mit Aminen umgesetzt. In Tabelle 1 sind diese Versuche zusammengefasst. Auch bei diesen Produkten wurden die Verhältnisse zwischen (Poly)Epoxid und Amin so gewählt, dass Aminogruppen und Epoxid-Gruppen in gleichen molaren Verhältnissen eingesetzt wurden. Um dieses Verhältnis sicherzustellen wurden jeweils bei den (Poly)Epoxiden das Epoxid-Equivalentgewicht und bei den Aminen die Aminzahl bestimmt.

**Tabelle 1**

| Beispiel Nr. | Menge eingesetztes Epoxid | Menge eingesetztes Amin |
|---|---|---|
| Beispiel 2 | 20 Teile Epikote 828 | 99,4 Teile Jeffamin M 2070 |
| | | 99,4 Teile Jeffamin M 2005 |
| Beispiel 3 | 30 Teile Epoxy-Novolak 431 | 160,3 Teile Jeffamin M 2070 |
| | | 160,3 Teile Jeffamin M 2005 |
| Beispiel 4 | 16Teile Epikote 828 | 176,2 Teile Jeffamin M 2005 |

| | | |
|---|---|---|
| Epoxy-Novolak 431 ist ein Handelsprodukt der Dow Deutschland Inc.. Es handelt sich um einen flüssigen Epoxy Novolak. Jeffamin M 2005 und Jeffamin M 2070 sind Handelsprodukte der Fa. Huntsman Petrochemical Corporation. Es handelt sich um Polyoxyalkylenmonoamine auf Basis Ethylenoxyd / Propylenoxyd. | | |

### Beispiel 5:

30 Teilen des Reaktionsproduktes aus Beispiel 2, welches eine Aminzahl (AZ) von 24 mg KOH/g hat, werden bei ca. 60°C mit 6,4 Teilen eines Phosphorsäuremonoesters (HO)₂PO(OR¹) mit R¹ = Butoxypolypropylenglycol (SZ∼ 112,5 mg KOH/g; im Folgenden als Phosphorsäureester A bezeichnet) versalzt. Man erhält eine klare, viskose, braune Reaktionslösung. Der Versalzungsgrad hat in diesem Beispiel den Wert 1.

**Tabelle 2**

| Beispiel Nr. | Menge des eingesetzten Epoxid/Amin-Adduktes | Menge des eingesetzten Phosphorsäureesters | Versalzungsgrad |
|---|---|---|---|
| Beispiel 6 | 40 Teile des Epoxid/ Amin-Adduktes aus Bsp. 2 | 9,6 Teile des Phosphorsäureesters B* | 1 |
| Beispiel 7 | 40 Teile des Epoxid/ Amin-Adduktes aus Bsp. 1 | 14,7 Teile des Phosphorsäureester B* | 1 |
| Beispiel 8 | 40 Teile des Epoxid/ Amin-Adduktes aus Bsp. 2 | 4,8 Teile des Phosphorsäureesters B* | 0,5 |
| Beispiel 9 | 40 Teile des Epoxid/ Amin-Adduktes aus Bsp. 2 | 19,2 Teile des Phosphorsäureesters B* | 2 |
| Beispiel 10 | 40 Teile des Epoxid/ Amin-Adduktes aus Bsp. 3 | 8,9 Teile des Phosphorsäureesters A | 1 |

| | | | |
|---|---|---|---|
| Bei dem Phosphorsäureester B handelt es sich um einen Phosphorsäuremonoesters (HO)₂PO(OR¹) mit R¹ = Butoxypoly(ethylenglycol-co-propylenglycol) (SZ∼ 100 mg KOH/g) | | | |

### Beispiel 11:

200 Teile des Epoxid-Amin-Adduktes aus Beispiel 2 werden mit 24,6 Teile Tallölfettsäure (Säurezahl ca. 195 mg KOH/g) gemischt. Bei diesem Mischungsverhältnis ist die Anzahl der Aminogruppen gleich der Anzahl der Carboxygruppen. Die Mischung wird mit 0,4 g Paratoluolsulfonsäure als Katalysator gemischt und unter Rühren auf 160°C erhitzt. Durch einen leichten Stickstoffstrom wird entstehendes Reaktionswasser aus der Reaktionsmischung entfernt. Nach ca. 3,5 h unter diesen Reaktionsbedingungen wurde die Reaktionstemperatur auf 200°C erhöht. Nach weiteren 6,5 Sunden ist die Aminzahl der Reaktionslösung auf einen Wert von ca. 11 mg KOH/g gefallen (theoretischer Ausgangswert ca. 22 mg KOH/g). Somit wurden ca. 50% aller Aminogruppen mit der Tallölfettsäure amidiert, der Rest der Aminogruppen liegt versalzt vor. Man erhält eine gelbbraune, klare Reaktionslösung.

### Beispiel 12:

200 Teile des Epoxid-Amin-Adduktes aus Beispiel. 2 werden mit 11,1 Teilen Butylacrylat im Sinne einer Michael-Reaktion umgesetzt. Hierzu wird der Mischung 0,25 Teile Anullex BHT zugesetzt und diese in einer Stickstoffatmosphäre ca. 12 h bei 100 °C gerührt, bis der Festkörper der Reaktionsmischung > 99% ist. Reste von Butylacrylat werden durch Vakuumdestillation entfernt. Man erhält ein klares rötlichgelbes Reaktionsprodukt.

Anullex BHT ist ein Handelsprodukt der Fa. Archimica , und wirkt als Stabilisator zur Verhinderung von Radikalkettenreaktionen.

### Beispiel 13:

25 Teile des Reaktionsproduktes aus Beispiel 12, mit einer AZ von 29,1mg KOH/g, werden mit 6,7 Teilen des Phosphorsäureesters B aus Beispiel 6 versalzt. Der Versalzungsgrad bei diesem Produkt hat den Wert 1. Man erhält ein klares, rötlichgelbes Reaktionsprodukt.

### Vergleichsbeispiel 14 - 16 (nicht erfindungsgemäß)

In den Vergleichbeispielen 14 und 15 wurden Epoxidadukte mit nicht erfindungsgemäßen aliphatischen Epoxiden hergestellt, um die überlegene Wirksamkeit der erfindungsgemäßen Addukte zu verdeutlichen. Auch bei diesen Produkten wurden die Verhältnisse zwischen Epoxid und Amin so gewählt, dass Aminogruppen und Epoxid-Gruppen in gleichen molaren Verhältnissen eingesetzt wurden. Um dieses Verhältnis sicherzustellen wurden jeweils bei den (Poly)Epoxid das Epoxid-Equivalentgewicht und bei den Aminen die Aminzahl bestimmt.

### Vergleichsbeispiel 14:

20 Teile Grilonit RV 1814 wurden analog Beispiel 1 mit 124,7 Teilen Jeffamin M 2070 umgesetzt. Man erhält eine klare, gelbe Reaktionsmischung.

Grilonit RV 1814 ist ein Handelsprodukt der Fa. Ems Primid. Es handelt sich um einen C13/C15-Alkylglycidylether.

### Vergleichsbeispiel 15:

30 Teilen des Reaktionsproduktes aus Beispiel 14, welches eine Aminzahl (AZ) von 23,6 mg KOH/g hat, werden bei ca. 60°C mit 6,4 Teilen des Phosphorsäuremonoesters A versetzt. Der Versalzungsgrad hat bei dieser Reaktion den Wert 1. Man erhält eine klare, braune Reaktionsmischung.

### Vergleichsbeispiel 16:

15 Teile Glycidylmethacrylat (Mn = 142 g/mol) wurden analog Beispiel 1 mit 197,6 Teilen Jeffamin M 2070 umgesetzt. Man erhält eine leicht trübe, farblose bis gelbe Reaktionslösung.

In den Vergleichbeispielen 17 und 18 wurden Epoxidaddukte, analog zur Patentschrift DE 36 23 297 hergestellt, da solche Produkte den beanspruchten erfindungsgemäßen Produkten chemisch am ähnlichsten sind und so den Stand der Technik definieren. Da die in Patentschrift DE 36 23 297 geschützten Produkte oftmals nicht wasserlöslich oder wasseremulgierbar sind, wurden zusätzlich Versalzungen dieser Produkte mit den erfindungsgemäßen Phosphorsäureestern durchgeführt, um mit dieser Maßnahme wasserlösliche bzw. wasseremulgierbare Produkte zu erhalten, die dann entsprechen abgetestet werden können.

### Vergleichsbeispiel 17:

28,2 Teile Oleylamin, 12,6 Teile Aminopropylimidazol, 1,4g Salicylsäure (Katalysator) werden in 251,2 2-Butoxyethanol als Lösungsmittel vorgelegt und auf 70°C erhitzt. Unter intensivem Rühren wird innerhalb von 1. Minute 37,6 g Epikote 828 in 68g 2-Butoxyethanol zugesetzt. Die Reaktionslösung wird dann 85°C aufgeheizt und bei dieser Temperatur 4 h gerührt. Man erhält klare gelbe Reaktionslösung mit einer Festkörpergehalt von ca. 20% und einer Aminzahl von ca. 41,5 mg KOH/g.

### Vergleichsbeispiel 18:

30 Teile des Reaktionsproduktes aus Vergleichsbeispiel 17 werden mit 11,3 Teilen Phosphorsäureester A versalzt. Man erhält ein klares gelbes Reaktionsprodukt mit einem Festkörpergehalt von ca. 42%.

### 2. Anwendungtstechnische Beispiele

Zur Prüfung der Wirksamkeit der erfindungsgemäßen Dispergiermittel wurden Pigmentpasten mit verschiedenen Additionsprodukten und deren mit Phosphorsäureestern versalzten Analoga hergestellt. Parallel dazu wurden auch Pigmentpasten mit den Produkten aus den nicht erfindungsgemäßen Vergleichsbeispielen 14 - 18 hergestellt.

Die so erhaltenden Pigmentpasten wurden anwendungstechnisch untersucht, indem die Pigmentpasten in verschiedene Bindemittelsysteme eingearbeitet wurden. Nach Applikation und Aushärtung der fertigen Pigmentlacke wurden dann Farbstärkemessungen an den Aufzügen vorgenommen.

Zur Herstellung der Pigmentpasten wurden 25 Teile des Rußpigments Spezialschwarz 100 der Fa. Degussa, 0,2% Byk 017 (Entschäumer der BYK-Chemie GmbH), 0,3 % Crayvallac Super (Rheologieadditiv der Fa. Lubrizol Coating Additives GmbH), das jeweilige Netz- und Dispergiermittel und Wasser vorgemischt. Die Additivmenge wurde so bemessen, dass 40 %, bezogen auf die Rußmenge, der Wirksubstanz des Additivs eingesetzt wurden. Der Ansatz wird dann mit demineralisiertem Wasser auf 100 Teile aufgefüllt. Diese Mischung wird mit 100 Teilen Glasperlen (1 mm Durchmesser) versetzt und mittels einer Polypropylenscheibe von 40 mm Durchmesser bei einer Umfangsgeschwindigkeit von 21 m/s bei 40°C 1 h in einer vertikalen Perlmühle der Fa Getzmann (Dispermat CV) dispergiert.

Zur Prüfung der Dispergierqualität werden 3% des nach oben beschriebener Methode hergestellten Rußkonzentrats 10 min in einem Skandex Rüttlers mit handelsüblichen Weißlacken vermischt.

Die fertigen Lacke werden dann in einer Nassfilmdicke von 100 µm auf Kontrastkarten (Nr. 2853) der Fa. BYK-Gardner appliziert.

Nach der Trocknung der Lacke werden die Beschichtungen dann visuell und mit Hilfe eines Farbmessgerätes der Fa. BYK-Gardner (Colour Guide, Sphere, Beobachtungswinkel 8°) bewertet.

Als Auflackmaterial wurden folgenden handelsüblichen Weißlacke verwendet:
1. Dulux Wohnraumlack Weiß (ICI-Paints Deco GmbH; Wasserverdünnbarer Acrylatlack)
2. Sikkens Setaliet BW (Akzo Nobel Decorative Coatings; Silikat Fassadenfarbe)
3. Sikkens Rubbol AZ, Hochglanzlack, Base 09 (Akzo Nobel Decorative Coatings; Alkydharzlack)

Es wurden die aufgeführten Weißlacke ausgewählt, da diese Systeme sehr unterschiedliche Lacktypen und Polaritäten abdecken. Mit dieser Auswahl soll die Eignung der erfindungsgemäßen Additive als Netz- und Dispergiermittel für Universaltönpasten unterstrichen werden.

In Tabelle 3 sind die Ergebnisse der Farbstärkemessungen zusammengefasst. Hierbei wurde die Farbstärke der Lacke, die mit dem Produkt aus Beispiel 2 hergestellt wurden, willkürlich auf den Wert 100% gesetzt, niedrigere Werte zeigen eine Verschlechterung der Farbstärke an, höhere Werte eine Verbesserung der Farbstärke.

**Tabelle 3**

| Produkt aus | Farbstärkemessung Dulux Wohnraumlack | Farbstärkemessung Setaliet Fassadenfarbe | Farbstärkemessung Rubbol AZ Alkydharz |
|---|---|---|---|
| Beispiel 1 | 90 % | 87 % | 95% |
| Beispiel 2 | 100% | 100% | 100% |
| Beispiel 6 | 101% | 98% | 105% |
| Beispiel 13 | 92 % | 90% | 81% |
| | | | |
| Vergleichsbsp. 14 | 88 % | 77% | 61% |
| Vergleichsbsp. 15 | 83% | 61% | 60% |
| Vergleichsbsp. 16 | * | * | * |
| Vergleichsbsp. 17 | * | * | * |
| Vergleichsbsp. 18 | * | * | * |

| | | | |
|---|---|---|---|
| * In diesen Fällen war keine Farbstärkemessung möglich, da sich die Rußkonzentrate aus den entspreche Produkten nicht herstellen ließen: Es kam vor oder während der Anreibungen zu starker Viskositätserhöhung des Mahlgutes oder zu stark inhomogenem Mahlgut, die eine korrekte Dispergierung unmöglich machten. Einige Produkte waren in Wasser überhaupt nicht löslich. Dieses Verhalten zeigten auch Produkte aus den Vergleichsbeispielen, die mit Phosphorsäureestern versalzt wurden. | | | |

Wie aus Tabelle 3 zu entnehmen ist, führen einzig die Pigmentlacke, die mit den erfindungsgemäßen Produkten hergestellt wurden, zu farbstarken defektfreien Beschichtungen. Ein ähnliches Bild ergibt sich für Pigmentlacke, die mit anderen erfindungsgemäßen Dispergiermitteln, sowie mit anderen Pigmenten hergestellt wurden.

Mit den nicht erfindungsgemäßen Produkten konnten in den meisten Fällen keine Dispergierung vorgenommen werden, da es entweder bereits bei der Vormischung oder aber bei dem eigentlichen Dispergiervorgang zu starker Verdickung des Mahlgutes oder zu starker Unverträglichkeit mit Wasser kam. Die nicht erfindungsgemäßen Produkte, mit denen Pigmentpasten hergestellt werden konnten, zeigten in den nachfolgenden Mischungen mit den Weißlacken deutlich schlechtere Werte in den Farbmessungen gegenüber den Pigmentpasten mit den erfindungsgemäßen Produkten. Außerdem kam es in vielen Fällen zu Störungen des Lackfilms durch Ausbildung von groben Partikeln durch Agglomeration der Pigmentteilchen mit dem Bindemittel der verwendeten Weißlacke.

## Patentansprüche

1. Als Netz- und Dispergiermittel geeignete Additionsverbindungen, die erhältlich sind durch Umsetzung von
(I) mono- oder polyfunktionellen, aromatischen Epoxiden
mit
(II) Polyoxyalkylenmonoaminen, die ein zahlenmittleres Molekulargewicht von > 400 g/mol, eine primäre oder sekundäre Aminogruppe und mindestens 4 Ethersauerstoffe pro Molekül aufweisen, wobei
90 bis 100 % der Epoxidgruppen des Ausgangsmaterials umgesetzt sind,
der Gewichtsanteil der Additionsverbindungen an aromatischen Gruppen nicht mehr als 50 % beträgt und
die Additionsverbindungen mindestens eine versalzbare Aminogruppe pro Molekül aufweisen oder als Salz vorliegen.

2. Additionsverbindungen nach Anspruch 1, **dadurch gekennzeichnet, dass** im Falle von polyfunktionellen Epoxiden im molaren Mittel mindestens eine Epoxidgruppe pro Molekül mit einem Polyoxyalkylenmonoamin umgesetzt ist und eine oder mehrere weitere Epoxidgruppen mit einer anderen Epoxid-reaktiven Verbindung umgesetzt ist bzw. sind.

3. Additionsverbindungen nach Anspruch 2, **dadurch gekennzeichnet, dass** die weitere oder die weiteren Epoxidgruppen mit einer gesättigten oder ungesättigten Carbonsäure, einem Alkohol oder einem primären oder sekundären Amin umgesetzt ist bzw. sind.

4. Additionsverbindungen nach Anspruch 1 bis 3, **dadurch gekennzeichnet, dass** mehr als 95 % der Epoxidgruppen des Ausgangsmaterials umgesetzt sind.

5. Additionsverbindungen nach Anspruch 1 bis 4, **dadurch gekennzeichnet, dass** sie als Phosphorsäureestersalze einer Phosphorsäure der allgemeinen Formel
(HO)₃₋ₙ PO(OR¹)ₙ
vorliegen, in der
n = 1 oder 2 ist und
R¹ einen geradkettigen oder verzweigten Alkylrest mit 5 bis 20 C-Atomen oder einen Aryl- oder Aralalkylrest mit 6 bis 26 C-Atomen
und/oder
einen Rest eines oxalkylierten Alkohols mit einem zahlenmittleren Molekulargewicht zwischen 100 und 5000 g/mol
und/oder
einen Rest mit mindestens einer Carbonsäureestergruppe und einem zahlenmittleren Molekulargewicht zwischen 400 und 5000 g/mol und/oder
einen Rest mit einer Urethangruppe und einem zahlenmittleren Molekulargewicht zwischen 100 und 5000 g/mol
dargestellt.

6. Additionsverbindungen nach Anspruch 1 bis 5, **dadurch gekennzeichnet, dass** die Epoxide (I) mit Polyoxyalkylenmonoamin (II) umgesetzt sind, die Ethylenoxid- und/oder Propylenoxideinheiten in der Polyetherkette enthalten.

7. Additionsverbindungen nach Anspruch 1 bis 6, **dadurch gekennzeichnet, dass** 10 bis 50 % der durch die Umsetzung der Epoxide (I) mit den Polyoxyalkylenmonoaminen (II) entstandenen sekundären Aminogruppen mit Fettsäuren umgesetzt sind.

8. Verfahren zur Herstellung von als Netz- und Dispergiermittel geeigneten Additionsverbindungen, **dadurch gekennzeichnet, dass**
(I) mono- oder polyfunktionelle, aromatische Epoxide
mit
(II) Polyoxyalkylenmonoaminen, die ein zahlenmittleres Molekulargewicht von > 400 g/mol, eine primäre oder sekundäre Aminogruppe und mindestens 4 Ethersauerstoffe pro Molekül aufweisen, zu Produkten umgesetzt werden, bei denen 90 bis 100 % der Epoxidgruppen des Ausgangsmaterials umgesetzt sind und der Gewichtsanteil der Additionsverbindungen an aromatischen Gruppen nicht mehr als 50 % beträgt,
und die Additionsverbindungen mindestens eine versalzbare Aminogruppe pro Molekül aufweisen oder die Additionsverbindungen versalzt werden.

9. Verfahren nach Anspruch 8, **dadurch gekennzeichnet, dass** die Additionsverbindungen mit einer Phosphorsäure der allgemeinen Formel
(HO)₃₋ₙ PO(OR¹)ₙ,
umgesetzt werden und
n = 1 oder 2 ist und
R¹ einen geradkettigen oder verzweigten Alkylrest mit 5 bis 20 C-Atomen oder
einen Aryl- oder Aralalkylrest mit 6 bis 26 C-Atomen
und/oder
einen Rest eines oxalkylierten Alkohols mit einem zahlenmittleren Molekulargewicht zwischen 100 und 5000 g/mol
und/oder
einen Rest mit mindestens einer Carbonsäureestergruppe und einen zahlenmittleren Molekulargewicht zwischen 400 und 5000 g/mol und/oder
einen Rest mit einer Urethangruppe und einem zahlenmittleren Molekulargewicht zwischen 100 und 5000 g/mol
darstellt.

10. Verwendung der Additionsverbindungen nach Anspruch 1 bis 7 als Netz- und/oder Dispergiermittel.

11. Verwendung nach Anspruch 10, zur Dispergierung von Pigmenten und/oder Füllstoffen in Beschichtungsmitteln.

12. Verwendung nach Anspruch 11, **dadurch gekennzeichnet, dass** Pigmente und/oder Füllstoffe mit den Additionsverbindungen beschichtet werden.

13. Mit den Additionsverbindungen nach Anspruch 1 bis 7 beschichtete Pigmente oder Füllstoffe.

14. Pigmentpasten enthaltend Pigmente, Bindemittel und Additionsverbindungen nach Anspruch 1 bis 7.

## Claims

1. Addition compounds suitable for use as wetting agents and dispersants and obtainable by reacting
(I) monofunctional or polyfunctional aromatic epoxides
with
(II) polyoxyalkylenemonoamines having a number-average molecular weight of > 400 g/mol, one primary or secondary amino group and at least 4 ether oxygens per molecule,
from 90 to 100% of the epoxide groups of the starting material having undergone reaction,
the weight fraction of aromatic groups in the addition compounds being not more than 50% and
the addition compounds containing per molecule at least one amino group on which salts can be formed, or being present as a salt.

2. Addition compounds according to Claim 1, **characterized in that** in the case of polyfunctional epoxides on a molar average at least one epoxide group per molecule has undergone reaction with a polyoxyalkylenemonoamine and one or more further epoxide groups have undergone reaction with another epoxide-reactive compound.

3. Addition compounds according to Claim 2, **characterized in that** the further epoxide group or groups has or have undergone reaction with a saturated or unsaturated carboxylic acid, with an alcohol or with a primary or secondary amine.

4. Addition compounds according to Claim 1 to 3, **characterized in that** more than 95% of the epoxide groups of the starting material have undergone reaction.

5. Addition compounds according to Claim 1 to 4, **characterized in that** they are in the form of ester salts with a phosphoric acid of the general formula
(HO)₃₋ₙPO(OR¹)ₙ
in which
n is 1 or 2 and
R¹ is a straight-chain or branched alkyl radical having 5 to 20 carbon atoms or an aryl or aralkyl radical having 6 to 26 carbon atoms
and/or
a radical of an oxalkylated alcohol with a number-average molecular weight of between 100 and 5000 g/mol
and/or
a radical with at least one carboxylic ester group and a number-average molecular weight of between 400 and 5000 g/mol
and/or
a radical with a urethane group and a number-average molecular weight of between 100 and 5000 g/mol.

6. Addition compounds according to Claim 1 to 5, **characterized in that** the epoxides (I) have undergone reaction with polyoxyalkylenemonoamines (II) which contain ethylene oxide and/or propylene oxide units in the polyether chain.

7. Addition compounds according to Claim 1 to 6, **characterized in that** from 10 to 50% of the secondary amino groups formed by the reaction of the epoxides (I) with the polyoxyalkylenemonoamines (II) have undergone reaction with fatty acids.

8. Process for preparing addition compounds suitable for use as wetting agents and dispersants, **characterized in that**
(I) monofunctional or polyfunctional aromatic epoxides are reacted
with
(II) polyoxyalkylenemonoamines which have a number-average molecular weight of > 400 g/mol, contain one primary or secondary amino group and have at least 4 ether oxygens per molecule, to form products in which from 90 to 100% of the epoxide groups in the starting material have undergone reaction and the weight fraction of aromatic groups in the addition compounds is not more than 50%,
and the addition compounds contain per molecule at least one amino group on which salts can be formed, or the addition compounds are converted into salts.

9. Process according to Claim 8, **characterized in that** the addition compounds are reacted with a phosphoric acid of the general formula
(HO)₃₋ₙPO(OR¹)ₙ
in which
n is 1 or 2 and
R¹ is a straight-chain or branched alkyl radical having 5 to 20 carbon atoms or an aryl or aralkyl radical having 6 to 26 carbon atoms
and/or
a radical of an oxalkylated alcohol with a number-average molecular weight of between 100 and 5000 g/mol
and/or
a radical with at least one carboxylic ester group and a number-average molecular weight of between 400 and 5000 g/mol
and/or
a radical with a urethane group and a number-average molecular weight of between 100 and 5000 g/mol.

10. Use of the addition compounds according to Claim 1 to 7 as wetting agents and/or dispersants.

11. Use according to Claim 10, for dispersing pigments and/or fillers in coating materials.

12. Use according to Claim 11, **characterized in that** pigments and/or fillers are coated with the addition compounds.

13. Pigments or fillers coated with the addition compounds according to Claim 1 to 7.

14. Pigment pastes comprising pigments, binders and addition compounds according to Claim 1 to 7.

## Revendications

1. Composés d'addition servant d'agents tensioactifs et de dispersion qui peuvent être obtenus en faisant réagir
(I) des époxydes aromatiques mono- ou polyfonctionnels
avec
(II) des monoamines polyoxyalkyléniques présentant une masse moléculaire moyenne en nombre supérieure à 400 g/mol, un groupement amino primaire ou secondaire et au moins 4 atomes d'oxygène de fonction éther par molécule, dans lesquels
90 à 100 % des groupements époxy du produit de départ sont réagis,
le pourcentage en poids de groupements aromatiques des composés d'addition ne s'élève pas à plus de 50 % et
les composés d'addition présentent au moins un groupement amino salifiable par molécule ou sont sous forme de sels.

2. Composés d'addition selon la revendication 1, **caractérisés en ce que**, dans le cas d'époxydes polyfonctionnels, en moyenne molaire, au moins un groupement époxy par molécule est réagi avec une monoamine polyoxyalkylénique et un ou plusieurs autres groupements époxy sont réagis avec un autre composé réactif à l'époxyde.

3. Composés d'addition selon la revendication 2, **caractérisés en ce que** le ou les autres groupements époxy sont réagis avec un acide carboxylique saturé ou insaturé, un alcool ou une amine primaire ou secondaire.

4. Composés d'addition selon la revendication 1 à 3, **caractérisés en ce que** plus de 95 % des groupements époxy du produit de départ sont réagis.

5. Composés d'addition selon la revendication 1 à 4, **caractérisés en ce qu'**ils sont présents sous forme de sels d'ester d'acide phosphorique d'un acide phosphorique de formule générale
(HO)₃₋ₙ PO(OR¹)ₙ
où
n = 1 ou 2 et
R¹ représente un groupe fonctionnel à chaîne droite ou ramifié présentant 5 à 20 atomes de carbone ou un groupe fonctionnel aryle ou aralalkyle présentant 6 à 26 atomes de carbone
et/ou
un groupe fonctionnel d'un alcool oxalkylé de masse moléculaire moyenne en nombre comprise entre 100 et 5000 g/mol
et/ou
un groupe fonctionnel avec au moins un groupement ester d'acide carboxylique et une masse moléculaire moyenne en nombre comprise entre 400 et 5000 g/mol
et/ou
un groupe fonctionnel avec un groupement uréthane et une masse moléculaire moyenne en nombre comprise entre 100 et 5000 g/mol.

6. Composés d'addition selon la revendication 1 à 5, **caractérisés en ce que** les époxydes (I) sont réagis avec la monoamine polyoxyalkylénique (II) qui comportent des unités oxyde d'éthylène et/ou oxyde de propylène dans la chaîne polyéther.

7. Composés d'addition selon la revendication 1 à 6, **caractérisés en ce que** 10 à 50 % des groupements amino secondaires issus de la réaction des époxydes (I) avec les monoamines polyoxyalkyléniques (II) sont réagis avec des acides gras.

8. Procédé de fabrication de composés d'addition servant d'agents tensioactifs et de dispersion, **caractérisés en ce que**
(I) des époxydes aromatiques mono- ou polyfonctionnels sont réagis
avec
(II) des monoamines polyoxyalkyléniques qui présentent une masse moléculaire moyenne en nombre supérieure à 400 g/mol, un groupement amino primaire ou secondaire et au moins 4 atomes d'oxygène de fonction éther par molécule pour donner des produits, pour lesquels 90 à 100 % des groupements époxy du produit de départ sont réagis et le pourcentage en poids de groupements aromatiques des composés d'addition ne s'élève pas à plus de 50 %,
et les composés d'addition présentent au moins un groupement amino salifiable par molécule ou les composés d'addition sont salifiés.

9. Procédé selon la revendication 8, **caractérisé en ce que** les composés d'addition sont réagis avec un acide phosphorique de formule générale
(HO)₃₋ₙ PO(OR¹)ₙ
et
n = 1 ou 2 et
R¹ représente un groupe fonctionnel alkyle à chaîne droite ou ramifié présentant 5 à 20 atomes de carbone ou un groupe fonctionnel aryle ou aralalkyle présentant 6 à 26 atomes de carbone
et/ou
un groupe fonctionnel d'un alcool oxalkylé de masse moléculaire moyenne en nombre comprise entre 100 et 5000 g/mol
et/ou
un groupe fonctionnel avec au moins un groupement ester d'acide carboxylique et une masse moléculaire moyenne en nombre comprise entre 400 et 5000 g/mol
et/ou
un groupe fonctionnel avec un groupement uréthane et une masse moléculaire moyenne en nombre comprise entre 100 et 5000 g/mol.

10. Utilisation des composés d'addition selon la revendication 1 à 7 comme agents tensioactifs et/ou de dispersion.

11. Utilisation selon la revendication 10 pour la dispersion de pigments et/ou matériaux de remplissage dans des agents de revêtement.

12. Utilisation selon la revendication 11, **caractérisée en ce que** des pigments et/ou matériaux de remplissage sont revêtus des composés d'addition.

13. Pigments ou matériaux de remplissage revêtus des composés d'addition selon la revendication 1 à 7.

14. Pâtes pigmentaires contenant des pigments, liants et composés selon la revendication 1 à 7.
